# FASCICULE DE BREVET EUROPEEN

(11) **EP 2 308 619 B1**
(45) Date de publication et mention de la délivrance du brevet: **16.03.2016**
(21) Numéro de dépôt: 08022029.6
(22) Date de dépôt: 18.12.2008
(51) Int. Cl.: B23B 5/16, B23B 3/24

(54) **Dispositif de grattage d'un tube**
Vorrichtung zum Schaben eines Rohrs
Device for scraping a tube

(30) Priorité: 17.12.2007 FR 0759912
(43) Date de publication de la demande: 13.04.2011
(73) Titulaire: GDF SUEZ, 92400 Courbevoie (FR)
(72) Inventeur: Bideault, Jean-Michel, 95480 Pierrelaye (FR)
(74) Mandataire: Novagraaf Technologies

(56) Documents cités:
- DE-A1- 10 251 999
- DE-U1- 20 109 153
- GB-A- 1 464 606
- US-A- 3 431 646
- US-A- 4 791 842
- US-A- 5 894 772
- US-A1- 2002 129 684
- US-A1- 2006 236 547

## Description

L'invention concerne un dispositif de grattage d'un tube selon la revendication 1.

Les tubes plastiques sont visés, en particulier les tubes d'alimentation en fluide sous pression (typiquement du gaz) dont il est conseillé d'en gratter la surface extérieure avant de les assembler. Un tel assemblage s'opère actuellement de manière habituelle par électro-soudage, le retrait de la pellicule de surface oxydée qu'érode le gratteur contribue à la qualité de la jonction soudée.

Il existe de nombreux dispositifs de ce type.

On connaît du brevet DE10251999 A1 un dispositif de grattage d'un tube comprenant:
un corps articulé autour d'un axe d'articulation à disposer parallèlement à l'axe du tube (4), le corps présentant ainsi deux mâchoires pouvant pivoter autour dudit axe d'articulation entre une position ouverte et
une position stable fermée dans laquelle les mâchoires sont plus rapprochées du tube que dans la position ouverte, les mâchoires comprenant une première partie de moyens d'entraînement en rotation des dites mâchoires autour du tube en position fermée,
et des moyens de râpe du tube venant au contact d'une surface extérieure de ce tube pour le râper, en position fermée des mâchoires, les moyens de râpe étant montés pour tourner avec le corps, et donc avec les mâchoires,
et des moyens de roulement montés en surface intérieure des mâchoires, à l'écart des moyens de râpe, pour faire rouler ces mâchoires autour de la surface extérieure du tube, en position fermée des dites mâchoires.

Un objectif est ici de pouvoir intervenir rapidement, avec un appareil aisé à manoeuvrer et compact.

Il est ainsi proposé que le dispositif précité comprenne :
- un corps articulé autour d'un axe d'articulation à disposer parallèlement à l'axe du tube, le corps présentant ainsi deux mâchoires pouvant pivoter autour dudit axe d'articulation entre :
   - une position stable ouverte permettant de placer le corps autour du tube et de l'en retirer,
   - une position stable fermée dans laquelle les mâchoires sont plus rapprochées du tube que dans la position ouverte, les mâchoires comprenant une première partie de moyens d'entraînement en rotation des dites mâchoires autour du tube en position fermée,
   ledit corps portant des moyens de manoeuvre des mâchoires, (pour les faire passer de leur position stable ouverte à leur position stable fermée, et inversement, et des moyens de râpe du tube venant au contact d'une surface extérieure de ce tube pour le râper, en position fermée des mâchoires, les moyens de râpe étant montés pour tourner avec le corps, et donc avec les mâchoires,
- une seconde partie de moyens d'entraînement adaptée pour être engagée avec la première partie des moyens d'entraînement, pour réaliser, en position engagée, le dit entraînement en rotation des mâchoires,
- et des moyens de roulement montés en surface intérieure des mâchoires, à l'écart des moyens de râpe, pour faire rouler ces mâchoires autour de la surface extérieure du tube, en position fermée des dites mâchoires.

Il est important que les manoeuvres d'ouverture/fermeture du dispositif soient pratiques et sûres dans leur effet. La fiabilité et la sécurité sur un chantier d'intervention sont essentielles.

Aussi est-il conseillé que les moyens précités de manoeuvre des mâchoires comprennent des moyens à genouillère agissant en coordination avec des moyens ressort pour l'articulation des mâchoires entre lesdites positions stables ouverte et fermée.

Dans un but comparable, des moyens d'assistance à la fermeture des mâchoires sont prévus.

D'autres caractéristiques et avantages des solutions ici développées apparaîtront encore de la description plus complète qui suit en référence aux dessins annexés où :
- la figure 1 schématise le corps articulé de l'outil, avec ses deux mâchoires et ici une lame (12a) de grattage, le tout positionné autour d'un tube à gratter ; les mâchoires sont ouvertes,
- la figure 2 schématise en vue de dessous une deuxième partie de l'outil portant une partie (ici motorisée) d'entraînement en rotation du corps autour du tube,
- la figure 3 montre, de face (coupe perpendiculaire à l'axe du tube), le corps de la fig.1, mâchoires ouvertes,
- la figure 4 montre, aussi de face, le corps, mâchoires fermées, en position opérationnelle, surmonté de la deuxième partie (motorisée) de l'outil qui l'entraîne alors automatiquement en rotation autour du tube,
- la figure 5 montre, de côté, la vue de la figure 4,
- les figures 6 et 7 détaillent la came d'aide à l'ouverture/fermeture des mâchoires,
- la figure 8 détaillé l'engrènement pour l'entraînement en rotation du corps, favorablement prévu sur la partie motorisée de l'outil,
- la figure 9 détaille le moyen manuel d'entraînement en rotation du corps, utilisable en substitution de la partie motorisée de la figure 4,
- les figures 10 et 11 détaillent à nouveau l'engrènement pour l'entraînement en rotation du corps, notamment l'amplitude et le mouvement alternatif angulaire de va et vient, dans la solution motorisée,
- et les figures 12 et 13 détaillent, en vue de dessous une partie de la structure de commande automatique de la fig.4, avec son chariot qui assure le mouvement de va et vient précité.

On notera dès à présent que, sur les figures, toutes lignes cachées ne sont pas nécessairement en pointillés. Les flèches de référence pointant les éléments constitutifs correspondants le sont.

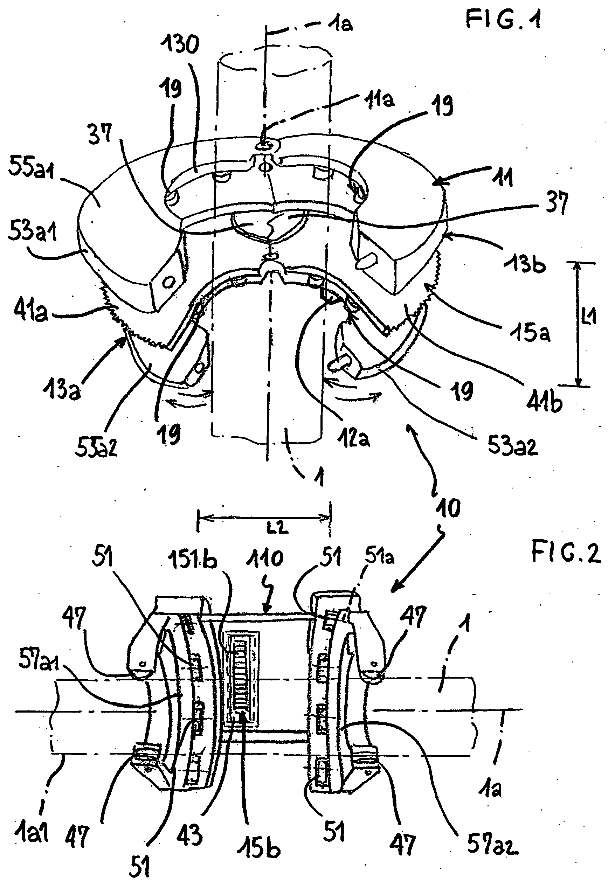

Figures 1 et 2, on voit suivant deux vues différentes un dispositif conforme à l'invention de grattage d'un tube 1. Il s'agit d'un tube plastique qui peut être en polyéthylène.

Ce dispositif de grattage 10 comprend globalement deux parties :
- un corps 11 pourvu d'au moins une lame 12a de grattage et articulé autour d'un axe 11a d'articulation à disposer parallèlement à l'axe 1a du tube, le corps présentant ainsi deux mâchoires 13a,13b pouvant pivoter autour dudit axe d'articulation,
- et un second bloc (ou structure) 110 portant une partie 15b des moyens 15a, 15b d'entraînement en rotation des mâchoires, et donc de la lame 12 de grattage, cette partie d'entraînement 15b étant adaptée pour être engagée avec (par-dessus) la première partie 15a de ces moyens d'entraînement montés sur le corps 11.

Un tel dispositif est particulièrement approprié pour intervenir à distance, sur une canalisation en place. Typiquement, l'intervention se déroule depuis le haut d'une fouille, après que l'opérateur a dégagé les abords immédiats de la conduite et donc retiré les sols autour d'elle, par exemple sur environ 0.25m2.

C'est d'abord le corps 11 qui est descendu dans la fouille ouverte.

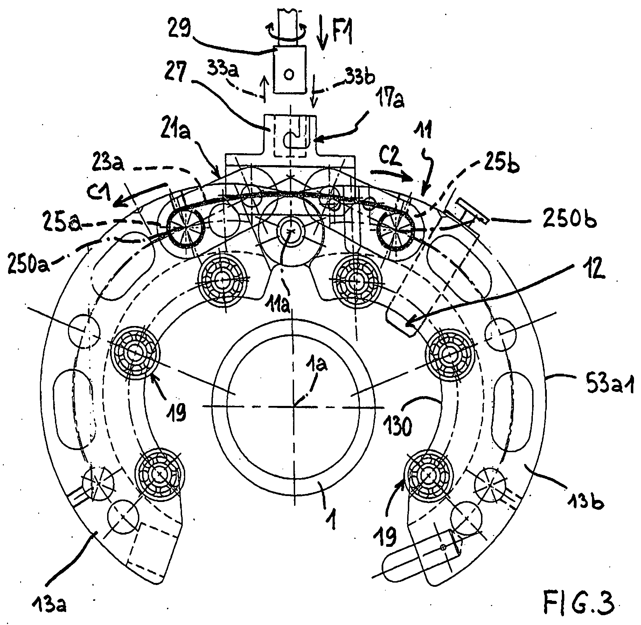

Les figures 1,3 le montrent avec ses mâchoires 13a, 13b ouvertes, prêtes à se refermer autour du tube 1.

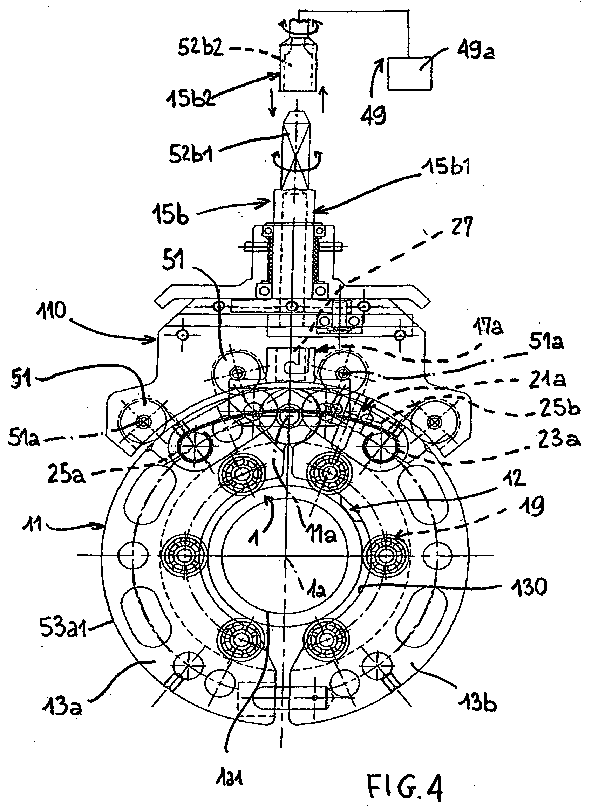

En effet, ces mâchoires peuvent pivoter autour de l'axe d'articulation 11a entre :
- une position stable ouverte permettant de placer le corps 11 autour du tube et de l'en retirer,
- et une position stable fermée (fig.4) dans laquelle les mâchoires 13a, 13b sont plus rapprochées du tube 1 que dans la position ouverte.

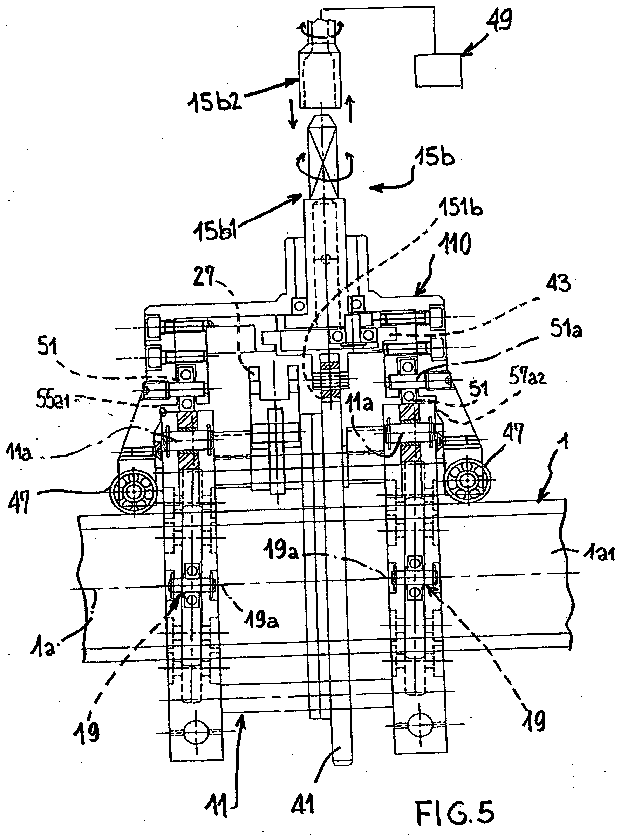

Comme indiqué plus haut, et montré notamment figs. 4, 5, les mâchoires comprennent, ou portent, la première partie 15a des moyens 15a, 15b prévus pour l'entraînement en rotation des mâchoires autour du tube, en position fermée de ces dernières.

Pour faire passer ces mâchoires de leur position stable ouverte à leur position stable fermée, et inversement, le corps 11 porte des moyens 17a de manoeuvre des mâchoires ; cf. figs. 3, 4 notamment.

Pour éroder la surface extérieure 1a1 du tube, le corps 11 porte donc en outre les moyens 12 de râpe du tube qui, en position fermée des mâchoires, viennent au contact de cette surface 1a1 (fig.4).

La lame coupante des moyens 12 de râpe est de préférence monté déplaçable sur un moyen de rappel (tel un ressort) et son articulation (typiquement pivotement) dans le sens de la génératrice du tube est autorisé par une rotule de faible débattement pour épouser les courbures résiduelles de celui-ci, tout en respectant un rayon de courbure maximum. L'épaisseur du copeau pourra varier de préférence de 0.2mm à 0.4mm. Favorablement, le prélèvement de matière du tube s'effectuera en continu et la largeur du copeau correspondra à l'avance axiale (1a) obtenus lors de la rotation de l'outil 10, afin d'éviter les absences de grattage et les chevauchements de prélèvement.

Les moyens de râpe sont montés pour tourner avec le corps, et donc avec les mâchoires, lorsque ces dernières sont entrainées autour du tube par les moyens précitées 15a, 15b, c'est-à-dire lorsque la seconde partie 15b de ces moyens d'entraînement est engagée avec la première partie 15a.

Pour un déplacement sans frottement excessif des mâchoires autour du tube, des moyens 19 de roulement montés en surface intérieure 130 des mâchoires, à l'écart des moyens 12 de râpe sont par ailleurs prévus sur le corps 11 pour faire rouler les mâchoires 13a, 13b autour de la surface extérieure 1a1 du tube, en position fermée des dites mâchoires.

En particulier figs.3,4, on voit que les moyens 17a de manoeuvre des mâchoires portés par le corps 11 comprennent des moyens 21a à genouillère agissant en coordination avec des moyens ressort 23a pour l'articulation des mâchoires entre leurs positions stables ouverte et fermée.

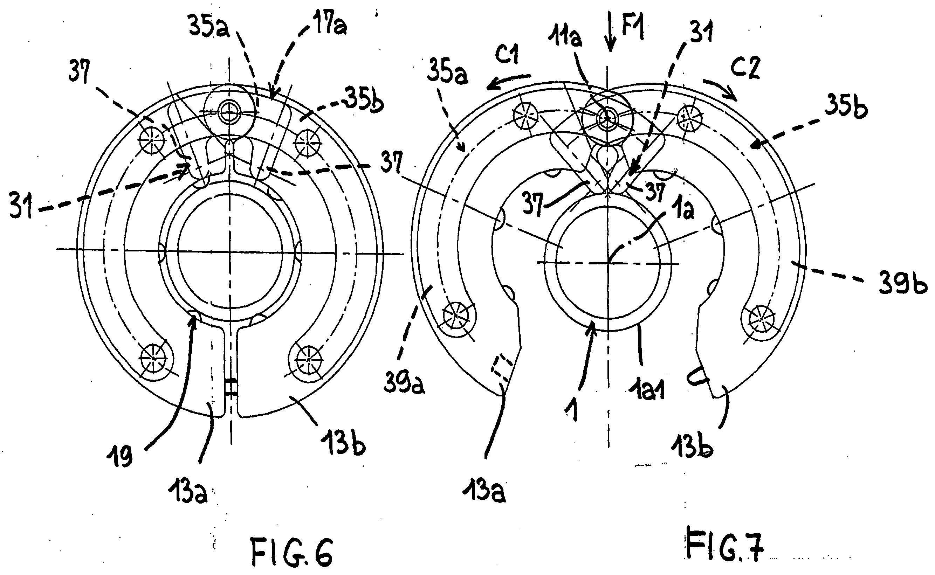

Sur ces figures, on remarque que ces moyens à genouillère comprennent deux leviers 25a, 25b. Chaque levier est articulé d'un côté sur l'une des mâchoires (axes 250a, 250b fig.3). De l'autre côté, un embout de manoeuvre 27 s'articule sur chacun de ces leviers, pour les commander via une tige 29 de commande à distance fixée de façon amovible à l'embout 27, ici via une liaison amovible à baïonnette. La tige 29 est manoeuvrable par l'opérateur à distance, typiquement depuis le haut de la fouille. Le tout définit l'essentiel des moyens précités 17a de manoeuvre des mâchoires, lesquels peuvent avantageusement être complétés par des moyens 31 d'assistance à la fermeture desdites mâchoires montrés figs. 6, 7.

A partir des figs.3,4,6,7, on comprend que l'ouverture des mâchoires 13a, 13b du corps 11 s'opère par traction sur les moyens 21a à genouillère (flèche 33a fig.3), la fermeture s'opérant à l'inverse, par poussée (flèche 33b).

Figs.6,7, on voit donc que les moyens 17a de manoeuvre comprennent, en tant que moyens 31 d'assistance à la fermeture des mâchoires, deux organes d'actionnement 35a,35b respectivement fixés à l'une et l'autre des mâchoires. Ces organes présentent chacun un bec 37 en saillie vis-à-vis de la surface intérieure des mâchoires, en position ouverte de celles-ci (fig.7). Les becs sont situés de manière que deux couples C1, C2 de fermeture soient créés, en opposition, par appui des becs sur le tube, consécutivement à un effort F1 exercé pour cela. On remarque que les becs sont décalés latéralement au-delà de l'axe 11a d'articulation, en regard de la surface intérieure de la mâchoire complémentaire de celle à laquelle l'organe considéré est fixé à l'endroit de sa partie allongée, respectivement 39a, 39b.

Ainsi, via les moyens 27, 29, un appui vertical suivant F1 contre le tube 1 créera donc les couples opposés C1, C2 et ainsi le basculement dans le même sens des mâchoires autour de l'axe 11a. Même en l'absence des moyens d'assistance 31, la fig.3 montre que l'effort F1 conjugué à l'appui précité (direct ou non) des mâchoires sur le tube à proximité de l'axe 11a au droit duquel s'étendent les moyens 17a, créé les couples contraires C1, C2 et la fermeture de ces mâchoires par articulations des leviers 25a, 25b qui, au-delà d'un point d'équilibre bascule d'un coup sec vers l'état fermé desdites mâchoires, sous l'effet du (des) ressort(s) (ici à lame) 23a monté autour des axes 250a, 250b et s'étendant entre eux, perpendiculairement et à l'axe 11a, au-dessus de lui, comme illustré.

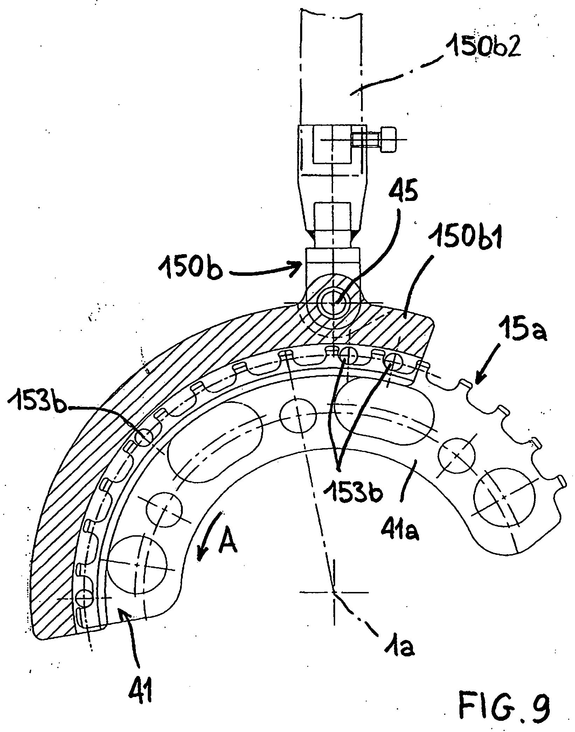

Pour l'entraînement en rotation autour du tube 1 des mâchoires en position fermée, différentes figures, et notamment les figs.4,5,8,9 montrent que l'on peut recourir à une commande soit manuelle (fig.9) soit motorisée (figs.4,5,8), ici opérable à distance, sous l'action de rallonges amovibles.

Avant de détailler ces commandes, on notera notamment figs . 1, 2, 4, 5, 8, 9, 10, 11, que les première et seconde parties 15a, 15b (150b fig.9) des moyens d'entraînement en rotation des mâchoires définiront favorablement un système d'entraînement denté où lesdites parties engrènent l'une avec l'autre.

Pour conjuguer fiabilité, efficacité et simplicité, la première partie des moyens d'entraînement en rotation des mâchoires comprend ici, suivant la solution préférée illustrée, une couronne 41 en deux parties extérieurement dentées 41a, 41b articulées l'une par rapport à l'autre autour de l'axe d'articulation 11a.

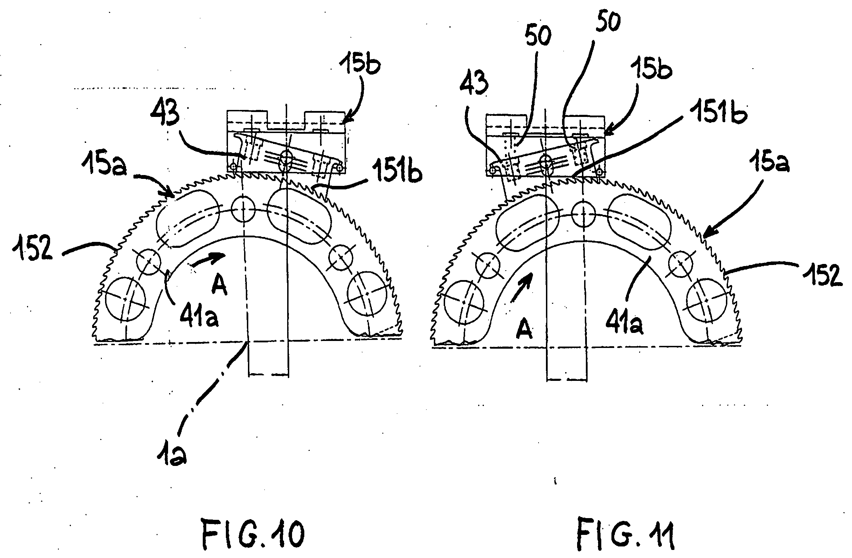

En complément, la seconde partie 15b (150b fig.9) des moyens d'entraînement comprendra favorablement :
- soit une ligne de dents 151b (figs.2,5,8,10,11) montée sur un chariot 43 mobile en translation de façon sensiblement tangente à la couronne 41, en position engagée d'engrènement, définissant ainsi une crémaillère,
- soit un ou plusieurs barreaux 153b de poussée s'tendant individuellement entre deux dents successives de la couronne 41 (fig.9).

Dans ce dernier cas, on voit fig.9 que la seconde partie des moyens d'entraînement est séparable de la première partie 15a et appartient à des moyens de commande manuelle comprenant une structure 150b1 portant la dite seconde partie des moyens d'entraînement et une canne allongée 150b2 montée articulée (en 45, suivant un axe parallèle à celui 1a du tube) sur la structure porteuse pour permettre de pousser sur elle, en position inter-engagée des première et seconde parties précitées 15a,150b. Ainsi, on pourra déplacer l'une par rapport à l'autre, et entrainer autour du tube, lesdits moyens de râpe 12, par rotation de la couronne 41, et donc des mâchoires alors dans leur état fermé autour du tube.

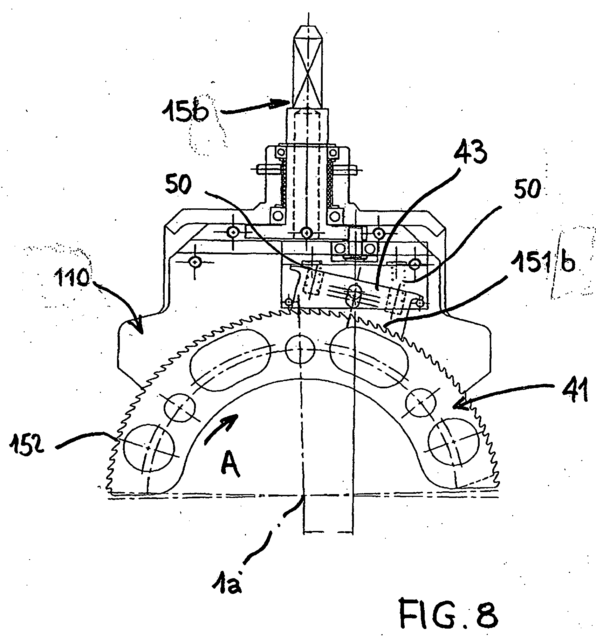

Fig.9, on voit que la structure 150b1, en arc de cercle, porte fixement les barreaux 153b de poussée. La canne 150b2 est amovible vis-à-vis de la structure 150b1. Pour faire la couronne, on engage les barreaux 153b dans creux des dents, on pousse dans le sens A par exemple vers la gauche, depuis le haut de la fouille via la canne 150b2. Une fois le grattage terminé, on replace la canne sensiblement verticalement et on la retire. Les dents de la couronne sont symétriques, et non pas plus pentues d'un côté comme figs.8,12,13.

Dans l'autre solution, un tronçon denté 151b sera monté déplaçable de façon tangente sous l'action d'un système de motorisation, le long de dents de la couronne 41, transversalement à l'axe 11a d'articulation des mâchoires.

S'il est prévu, le chariot porteur (43 ; figs.2,8-13) se déplacera favorablement en translation face à la couronne, dans un plan perpendiculaire à celui de cette couronne.

Là encore, la seconde partie 15b (15b1) des moyens d'entraînement sera séparable de la première 15a et appartiendra alors à des moyens de commande motorisée.

Figs. 2, 5, en particulier, ces moyens de commande apparaissent comme comprenant :
- la structure précitée 110 qui porte ladite seconde partie 15b/15b1 des moyens d'entraînement en rotation des mâchoires,
- une première série 47 de roulettes à disposer sur la surface extérieure 1a1 du tube, pour rouler sur elle sensiblement parallèlement à l'axe 1a de ce tube, en position fermée des mâchoires,
- et un système 49 de motorisation commandable à distance et propre à agir sur la seconde partie 15b, 15b1, 15b2 des moyens d'entraînement, pour entraîner en rotation la première partie, et donc les moyens de râpe 12, en position inter-engagée des première et seconde parties.

Favorablement :
- les moyens 15b, 49... de commande motorisée comprendront une seconde série de roulettes 51 (d'axes de rotation 51a) montées sur la structure 110 et à disposer sur un moins une piste extérieure 53a1 et/ou 53a2 de roulement du corps 11 pour rouler sur elle(s), autour de l'axe du tube, en position fermée des mâchoires ; cf. figs.2,4,
- et les mâchoires présenteront des surfaces extérieures lisses, cylindriques en position fermée de ces mâchoires, et qui définissent alors plusieurs dites pistes 53a1 et/ou 53a2, pour le roulement de la seconde série 51 précitée de roulettes.

L'essentiel des efforts supportés par la structure 110 sera reporté sur le tube, via les roulettes 47.

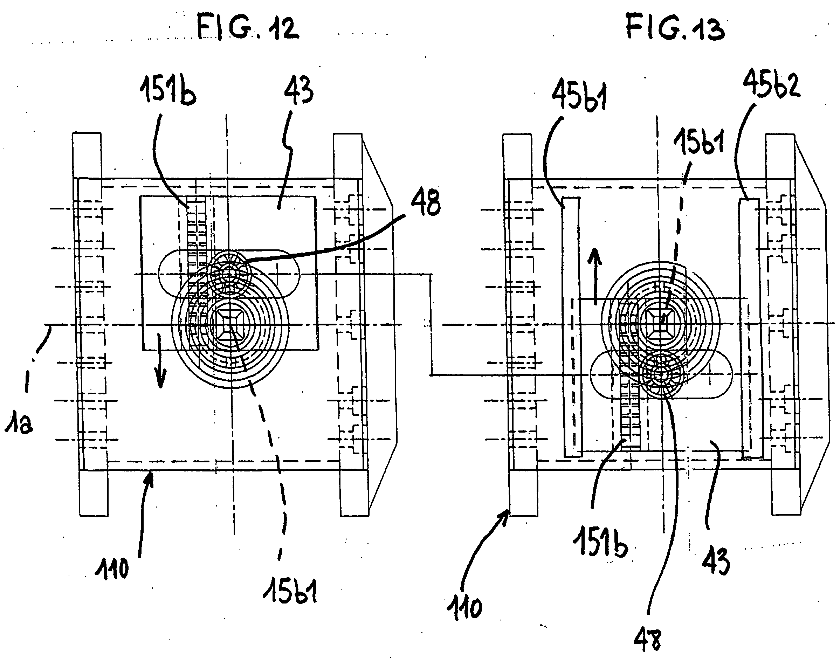

Figs.12,13, on voit encore que le chariot 43 est mobile en translation sur la structure 110 par l'intermédiaire d'une bielle 48 motorisée par le système de motorisation 49 et que ce chariot est couplé à un moyen 50 de rappel pour replacer la ligne de dents 151b en engrènement avec des dents suivantes de la couronne, une fois ladite ligne de dents parvenue en fin de course. Comme illustré, les dents 152 ne sont ici pas symétriques, mais avec une pente plus marquée d'un côté, de sorte que la ligne de dents 151b ripe à contresens de la rotation A, quand elle arrive en fin de course, jusqu'à ce qu'elle engrène de nouveau, une fois revenue vers l'arrière avec suffisamment de prise.

A partir des figs.4,5, on comprend en outre que le système de motorisation 49, qui comprend un moteur électrique 49a, est favorablement séparable de la structure 110, via par exemple deux embouts carrés complémentaires séparables 52b1, 52b2 prévus respectivement sur les parties 15b1, 15b2 (voir fig.4). La rotation du moteur 49a sera ainsi transformée en translation du chariot 43 par la bielle 48.

Comme montré notamment fig.1, pour tendre vers une construction compacte et performante, les mâchoires 13a, 13b comprendront de préférence, le long de l'axe d'articulation 11a et disposés côte à côte, la couronne 41 et au moins un bloc 55a1/55a2, également en deux parties articulées autour dudit axe 11a, ce bloc portant intérieurement certains au moins des moyens de râpe 12, ici la lame repérée 12a.

Dans la version préférée montrée fig.1, la couronne extérieurement dentée 41 est disposée de façon coaxiale entre deux dits blocs 55a1/55a2 en deux parties articulées dont l'un (au moins) porte lesdits moyens de râpe 12, en surface intérieure, et les pistes précitées de roulement 53a1 et/ou 53a2 sont définies sur la surface extérieure du ou de ces bloc(s).

En l'espèce, les deux séries de roulettes 51 latérales de la fig.2 roulent respectivement sur l'une et l'autre des pistes 53a1 et 53a2.

Dans cette situation, la structure 110 coiffe le corps 11, comme montré figs.4, 5, la largeur L1 entre les surfaces latérales extérieures des mâchoires (blocs 55a1/55a2 ; fig.1) étant très légèrement inférieure à la largeur L2 entre les surfaces intérieures des épaulements latéraux 57a1, 57a2 de cette structure 110.

L'appui latéral alors réalisé entre les surfaces intérieures des épaulements latéraux 57a1, 57a2 et les surfaces latérales extérieures des blocs 55a1/55a2 permet une transmission d'effort entre la structure 110 et le corps 11 et de maintenir en ligne l'engrènement précité.

Précisément, on prévoit, pour déplacer les moyens de râpe en hélice autour du tube et comme montré fig.5 :
- que chaque axe 19a de rotation des moyens de roulement 19 du corps 11 soit orienté légèrement de biais par rapport à l'axe 11a d'articulation ou à l'axe 1a du tube,
- et que la composante latérale de la force créée par la rotation du dispositif autour du tube passe donc, entre la structure 110 et le corps 11, par l'appui entre les surfaces et épaulements 55a1/55a2,57a1/57a2, définissant ainsi des moyens de butée.

Une lame unique 12 pourra être montée sur l'un des blocs latéraux 55a1/55a2.

En alternative (non représentée) chacun des deux blocs latéraux articulés 55a1/55a2 entre lesquels s'étend coaxialement la couronne extérieurement dentée 41 pourront porter un desdits moyens de râpe, en surface intérieure.

En particulier dans ce dernier cas, les blocs 55a1/55a2 pourront en outre être montés déplaçables l'un par rapport à l'autre parallèlement à l'axe 11a d'articulation des mâchoires, pour adapter la longueur à râper. Des barreaux parallèles de guidage pourront pour cela s'étendre entre eux et un système de maintien (écrou, goupille...) fixera de manière réglable l'écartement (version non représentée).

## Revendications

1. Dispositif de grattage d'un tube (1), le dispositif comprenant :
- un corps (11) articulé autour d'un axe d'articulation à disposer parallèlement à l'axe du tube (1), le corps (11) présentant ainsi deux mâchoires (13a, 13b) pouvant pivoter autour dudit axe d'articulation entre :
• une position stable ouverte permettant de placer le corps (11) autour du tube (1) et de l'en retirer,
• une position stable fermée dans laquelle les mâchoires (13a, 13b) sont plus rapprochées du tube (1) que dans la position ouverte, les mâchoires (13a, 13b) comprenant une première partie (15a) de moyens d'entraînement (15a, 15b) en rotation des dites mâchoires (13a, 13b) autour du tube (1) en position fermée,
ledit corps (11) portant des moyens de manoeuvre (17a) des mâchoires (13a, 13b), pour les faire passer de leur position stable ouverte à leur position stable fermée, et inversement, et des moyens de râpe (12) du tube (1) venant au contact d'une surface extérieure de ce tube (1) pour le râper, en position fermée des mâchoires (13a, 13b), les moyens de râpe (12) étant montés pour tourner avec le corps (11), et donc avec les mâchoires (13a, 13b),
- une seconde partie (15b) de moyens d'entraînement (15a, 15b) adaptée pour être engagée avec la première partie (15a) des moyens d'entraînement (15a, 15b), pour réaliser, en position engagée, le dit entraînement en rotation des mâchoires (13a, 13b),
- et des moyens de roulement montés en surface intérieure des mâchoires (13a, 13b), à l'écart des moyens de râpe (12), pour faire rouler ces mâchoires (13a, 13b) autour de la surface extérieure du tube (1), en position fermée des dites mâchoires (13a, 13b).

2. Dispositif selon la revendication 1, **caractérisé en ce que** lesdits moyens de manoeuvre (7a) des mâchoires (13a, 13b) comprennent des moyens à genouillère (21a) agissant en coordination avec des moyens ressort pour l'articulation des mâchoires (13a, 13b) entre lesdites positions stables ouverte et fermée.

3. Dispositif selon l'une des revendications précédentes, **caractérisé en ce que** lesdits moyens de manoeuvre (17a) des mâchoires (13a, 13b) comprennent des moyens d'assistance (31) à la fermeture de ces mâchoires (13a, 13b) comprenant deux organes d'actionnement (35a, 35b) respectivement fixés à l'une et l'autre des mâchoires (13a, 13b) et présentant chacun un bec (37) en saillie vis-à-vis de la surface intérieure des mâchoires (13a, 13b), en position ouverte de celles-ci, et situés de manière que deux couples de fermeture soient créés en opposition, par appui des becs (37) sur le tube (1).

4. Dispositif selon la revendication 2 ou les revendications 2 et 3, **caractérisé en ce que** les moyens à genouillère (21a) comprennent deux leviers (25a, 25b) :
- qui sont articulés chacun d'un côté sur l'une des mâchoires (13a, 13b),
- et sur lesquels s'articule, de l'autre, un embout de manoeuvre (27) auquel est fixée de façon amovible une tige (29) de commande à distance de l'ouverture, par traction sur les moyens à genouillère (21a), et de la fermeture, par poussée, des mâchoires (13a, 13b).

5. Dispositif selon l'une des revendications précédentes, **caractérisé en ce que** la seconde partie (15b) des moyens d'entraînement (15a, 15b) est séparable de la première partie (15a) et appartient à des moyens de commande manuelle comprenant une structure (110, 150b1) portant la dite seconde partie (15b) des moyens d'entraînement (15a, 15b) et une canne allongée (150b2) montée articulée sur la structure (110, 150b1) pour permettre de pousser sur elle, en position inter-engagée des première (15a) et seconde (15b) parties des moyens d'entraînement (15a, 15b), afin de déplacer l'une par rapport à l'autre et entrainer ainsi autour du tube (1) lesdits moyens de râpe (12).

6. Dispositif selon l'une des revendications 1 à 4, **caractérisé en ce que** la seconde partie (15b) des moyens d'entraînement (15a, 15b) est séparable de la première (15a) et appartient à des moyens de commande motorisée comprenant :
- une structure (110, 150b1) portant la dite seconde partie (15b) des moyens d'entraînement (15a, 15b),
- une première série (47) de roulettes à disposer sur la surface extérieure du tube (1) pour rouler sur elle sensiblement parallèlement à l'axe de ce tube (1), en position fermée des mâchoires (13a, 13b),
- et un système de motorisation (49) commandable à distance propre à agir sur la seconde partie (15b) des moyens d'entraînement (15a, 15b), pour entraîner en rotation la première (15a), et donc les moyens de râpe (12), en position inter-engagée des première (15a) et seconde (15b) parties.

7. Dispositif selon l'une des revendications précédentes, **caractérisé en ce que** les première (15a) et seconde (15b) parties des moyens d'entraînement (15a, 15b) définissent un système d'entraînement denté où les dites parties engrènent l'une avec l'autre.

8. Dispositif selon la revendication 6 ou les revendications 6 et 7, **caractérisé en ce que** :
- les moyens de commande motorisée (15b, 49) comprennent une seconde série (51) de roulettes à disposer sur un moins une piste extérieure (53a1, 53a2) de roulement du corps (11) pour rouler sur elle(s), autour de l'axe du tube (1), en position fermée des mâchoires (13a, 13b), et
- les mâchoires (13a, 13b) présentent des surfaces extérieures lisses, cylindriques en position fermée de ces mâchoires (13a, 13b), et qui définissent alors plusieurs dites pistes (53a1, 53a2) pour le roulement de ladite seconde série (51) de roulettes.

9. Dispositif selon l'une des revendications précédentes, **caractérisé en ce que** la première partie (15a) des moyens d'entraînement (15a, 15b) en rotation des mâchoires (13a, 13b) comprend une couronne (41) en deux parties extérieurement dentées (41a, 41b), articulées l'une par rapport à l'autre autour dudit axe d'articulation.

10. Dispositif selon la revendication 9, **caractérisé en ce que**, le long de l'axe d'articulation, les mâchoires (13a, 13b) comprennent, disposés côte à côte, la dite couronne (41) et au moins un bloc (55a1, 55a2) également en deux parties articulées autour dudit axe d'articulation, ce bloc portant intérieurement certains au moins des moyens de râpe (12).

11. Dispositif selon les revendications 8 et 10, **caractérisé en ce que** la couronne extérieurement dentée (41) est disposée de façon coaxiale entre deux dits blocs (55a1, 55a2) en deux parties articulées dont l'un au moins porte lesdits moyens de râpe (12), en surface intérieure, et les dites pistes (53a1, 53a2) de roulement sont définies sur la surface extérieure du ou des dit(s) bloc(s) (55a1, 55a2).

12. Dispositif selon l'une des revendications précédentes, **caractérisé en ce que** :
- des moyens (19) de roulement sont montés en surface intérieure (130) des mâchoires pour les faire rouler autour de la surface extérieure (1a1) du tube, en position fermée de ces mâchoires,
- chaque axe (19a) de rotation de ces moyens (19) de roulement est orienté légèrement de biais par rapport à l'axe (11a) d'articulation,
- et une partie la force créée par la rotation de la structure (110) autour du tube passe entre ladite structure et le corps (11) par l'intermédiaire d'un appui latéral (55a1/55a2,57a1/57a2) entre eux, assurant ainsi un entrainement en hélice des moyens de râpe (12).

## Patentansprüche

1. Vorrichtung zum Schaben eines Rohres (1), wobei die Vorrichtung folgendes umfasst:
- einen Körper (11), der um eine Gelenkachse schwenkbar ist, der parallel zur Achse des Rohres (1) anzuordnen ist, wobei der Körper (11) somit zwei Backen (13a, 13b) aufweist, die um die besagte Gelenkachse geschwenkt werden können, zwischen:
-- einer stabilen offenen Position, in der der Körper (11) um das Rohr (1) gelegt, und wieder davon abgenommen werden kann,
-- einer stabilen geschlossenen Position, in der die Backen (13a, 13b) näher am Rohr (1) anliegen, als in der offenen Position, wobei die Backen (13a, 13b) einen ersten Abschnitt (15a) von Drehantriebsmitteln (15a, 15b) der besagten Backen (13a, 13b) um das Rohr (1) in der geschlossenen Position umfassen,
wobei der besagte Körper (11) Mittel zum Manövrieren (17a) der Backen (13a, 13b) trägt, um sie von ihrer stabilen offenen Position in ihre stabile geschlossene Position und umgekehrt zu bringen, und Mittel zum Raspeln (12) des Rohres (1), die in Kontakt mit einer Außenfläche dieses Rohres (1) kommen, um es in der geschlossenen Position der Backen (13a, 13b) zu raspeln, wobei die Raspelmittel (12) angebracht sind, um sich mit dem Körper (11) und somit mit den Backen (13a, 13b) zu drehen,
- einen zweiten Abschnitt (15b) von Antriebsmitteln (15a, 15b), der ausgeführt ist, um mit dem ersten Abschnitt (15a) der Antriebsmittel (15a, 15b) eingeführt zu werden, um in der eingeführten Position für den besagten Drehantrieb der Backen (13a, 13b) zu sorgen,
- und Laufeinrichtungen, die an der Innenfläche der Backen (13a, 13b) im Abstand zu den Raspelmitteln (12) angebracht sind, um diese Backen (13a, 13b) in der geschlossenen Position der besagten Backen (13a, 13b) um die Außenfläche des Rohres (1) laufen zu lassen.

2. Vorrichtung nach Anspruch 1, **dadurch gekennzeichnet, dass** die besagten Mittel zum Manövieren (7a) der Backen (13a, 13b) Mittel mit einem Kniehebel (21a) umfassen, die in Abstimmung mit den Federmitteln zum Artikulieren der Backen (13a, 13b) zwischen der besagten ofenen und geschlossenen stabilen Position wirken.

3. Vorrichtung nach einem der vorherigen Ansprüche, **dadurch gekennzeichnet, dass** die besagten Mittel zu Manövieren (17a) der Backen (13a, 13b) Mittel zum Unterstützen (31) der Schließung dieser Backen (13a, 13b) umfassen, die zwei Betätigungselemente (35a, 35b) umfassen, die jeweils an der einen oder der anderen der Backen (13a, 13b) befestigt sind, und in der offenen Position derselben jeweils einen hervorstehenden Schnabel (37) gegenüber der Innenfläche der Backen (13a, 13b) aufweisen, und derart angeordnet sind, dass durch das Anlegen der Schnäbel (37) am Rohr (1) zwei gegenüberliegende Schließpaare gebildet werden.

4. Vorrichtung nach Anspruch 2, oder den Ansprüchen 2 und 3, **dadurch gekennzeichnet, dass** die Mittel mit einem Kniehebel (21a) zwei Hebel (25a, 25b) umfassen:
- die jeweils auf einer Seite auf einer der Backen (13a, 13b) angelenkt sind,
- und auf denen sich auf der anderen ein Manövieransatz (27) bewegt, auf dem in abnehmbarer Form eine Stange (29) zum Fernsteuern der Öffnung der Backen (13a, 13b) durch Ziehen an den Mitteln mit einem Kniehebel (21a), und der Schließung durch Anschieben befestigt ist.

5. Vorrichtung nach einem der vorherigen Ansprüche, **dadurch gekennzeichnet, dass** der zweite Abschnitt (15b) der Antriebsmittel (15a, 15b) vom ersten Abschnitt (15a) getrennt werden kann, und zu manuellen Steuermitteln gehört, die eine Struktur (110, 150b1) umfassen, die den besagten zweiten Abschnitt (15b) der Antriebsmittel (15a, 15b) und ein längliches Rohr (150b2) trägt, das gelenkig auf der Struktur (110, 150b1) angebracht ist, um diese in der jeweils im Eingriff stehenden Position des ersten (15a) und des zweiten (15b) Abschnitts der Antriebsmittel (15a, 15b) anzuschieben, um einen im Verhältnis zum anderen zu verschieben, und somit die besagten Raspelmittel (12) um das Rohr (1) herum anzutreiben.

6. Vorrichtung nach einem der Ansprüche 1 bis 4, **dadurch gekennzeichnet, dass** der zweite Abschnitt (15b) der Antriebsmittel (15a, 15b) vom ersten Abschnitt (15a) getrennt werden kann, und zu motorisierten Steuermitteln gehört, die folgendes umfassen:
- eine Struktur (110, 150b1), die den besagten zweiten Abschnitt (15b) der Antriebsmittel (15a, 15b) trägt,
- eine erste Reihe (47) von Rollen, die an der Außenfläche des Rohres (1) anzuordnen sind, um darauf in der geschlossenen Position der Backen (13a, 13b) in etwa parallel zur Rohrachse (1) zu rollen,
- und ein aus der Ferne steuerbares Motorisierungssystem (49), das in der Lage ist, auf den zweiten Abschnitt (15b) der Antriebsmittel (15a, 15b) einzuwirken, um den ersten (15a), und somit die Raspelmittel (12) in der jeweils im Eingriff stehenden Position des ersten (15a) und des zweiten (15b) Abschnitts in Drehung zu versetzen.

7. Vorrichtung nach einem der vorherigen Ansprüche, **dadurch gekennzeichnet, dass** der erste (15a) und der zweite (15b) Abschnitt der Antriebsmittel (15a, 15b) ein verzahntes Antriebssystem definieren, wo die besagten Abschnitte ineinander eingreifen.

8. Vorrichtung nach Anspruch 6, oder den Ansprüchen 6 und 7, **dadurch gekennzeichnet, dass**:
- die motorisierten Steuermittel (15b, 49) eine zweite Reihe (51) von Rollen umfassen, die auf zumindest einer äußeren Rollbahn (53a1, 53a2) des Körper (11) anzubringen sind, um auf ihr (ihnen) in der geschlossenen Position der Backen (13a, 13b) um die Rohrachse (1) zu rollen, und
- die Backen (13a, 13b) in der geschlossenen Position dieser Backen (13a, 13b) glatte zylindrische Außenflächen aufweisen, und die somit mehrere besagte Bahnen (53a1, 53a2) zum Rollen der besagten zweiten Reihe (51) von Rollen definieren.

9. Vorrichtung nach einem der vorherigen Ansprüche, **dadurch gekennzeichnet, dass** der erste Abschnitt (15a) der Drehantriebsmittel (15a, 15b) der Backen (13a, 13b) einen außen verzahnten (41a, 41b) Kranz (41) in zwei Abschnitten umfasst, die um die besagte Gelenkachse herum zueinander gelenkig sind.

10. Vorrichtung nach Anspruch 9, **dadurch gekennzeichnet, dass** die Backen (13a, 13b) entlang der Gelenkachse nebeneinander angeordnet den besagten Kranz (41) und zumindest einen Block (55a1, 55a2) ebenfalls in zwei Abschnitten um die besagte Gelenkachse angeordnet umfassen, wobei dieser Block innen zumindest einige der Raspelmittel (12) umfasst.

11. Vorrichtung nach den Ansprüchen 8 und 10, **dadurch gekennzeichnet, dass** der außen verzahnte Kranz (41) koaxial zwischen zwei besagten Blöcken (55a1, 55a2) mit zwei beweglichen Abschnitten angeordnet ist, von denen zumindest einer an der Innenfläche die besagten Raspelmittel (12) trägt, und die besagten Rollbahnen (53a1, 53a2) auf der Außenfläche des oder der besagten Blocks (Blöcke) (55a1, 55a2) definiert werden.

12. Vorrichtung nach einem der vorherigen Ansprüche, **dadurch gekennzeichnet, dass**:
- Laufeinrichtungen (19) an der Innenfläche (130) der Backen angebracht sind, um sie in der geschlossenen Position dieser Backen um die Außenfläche (1a1) des Rohres rollen zu lassen,
- jede Rotationsachse (19a) dieser Laufeinrichtungen (19) leicht schräg im Verhältnis zur Gelenkachse (11a) ausgerichtet ist,
- und ein Teil der Kraft, die durch die Drehung der Struktur (110) um das Rohr erzeugt wird, durch ein seitliches Anlegen (55a1,/55a2, 57a1/57a2) zueinander zwischen der besagten Struktur und dem Körper (11) verläuft, wodurch ein Spiralantrieb der Raspelmittel (12) erzeugt wird.

## Claims

1. A tube (1) scraping device including:
- a body (11) adapted to rotate about a pivot pin to be arranged parallel to an axis of the tube (1), the body (11) having two jaws (13a, 13b) adapted to rotate about said pivot pin between:
-- a stable open position enabling the body (11) to be disposed around the tube (1) and removed therefrom;
-- a stable closed position in which the jaws (13a, 13b) are closer to the tube (1) than in the open position, the jaws (13a, 13b) including a first part (15a) of driving means (15a, 15b) adapted to drive said jaws (13a, 13b) in rotation about the tube (1) while the jaws are in the closed position,
said body (11) holding jaw (13a, 13b) maneuvering means (17a), for moving said jaws from the stable open position to the stable closed position, and the reverse, and tube (1) scraping means (12) adapted to come into contact with an external surface of said tube (1) with a view to scraping it, while said jaws (13a, 13b) are in the closed position, the scraping means (12) being mounted so as to rotate with the body (11), and therefore with the jaws (13a, 13b),
- a second part (15b) of the driving means (15a, 15b) adapted for engaging with the first part (15a) of the driving means (15a, 15b), with a view to causing, in an engaged position, said rotation of the jaws (13a, 13b),
- and rolling means mounted at an internal surface of the jaws (13a, 13b), away from the scraping means (12), so as to cause said jaws (13a, 13b) to roll around an external surface of the tube (1), while said jaws (13a, 13b) are in the closed position.

2. The device according to claim 1, wherein said jaw (13a, 13b) maneuvering means (7a) include toggle means (21a) adapted to act in coordination with spring means for pivoting the jaws (13a, 13b) between said open and closed positions.

3. The device according to one of the previous claims, wherein said jaw (13a, 13b) maneuvering means (17a) include aid means (31) for aiding the closing of the jaws (13a, 13b), said aid means including two actuation members (35a, 35b) which are respectively attached to one and the other of said jaws (13a, 13b), each actuation member having a nose (37) projecting from said internal surface of the jaws (13a, 13b), while said jaws are in the open position, and located so that two opposing closing torques are created, by the contact of the noses (37) on the tube (1).

4. The device according to claim 2 or claims 2 and 3, wherein the toggle means (21a) include two levers (25a, 25b):
- that are each pivotably connected to one of the jaws (13a, 13b),
- and to which a maneuvering end part (27) is pivotably connected, said maneuvering end part being removably attached to a rod (29) for a remote control of the opening and of the closing of the jaws (13a, 13b), respectively by pulling and pushing on the toggle means (21a) .

5. The device according to one of the previous claims, wherein the second part (15b) of the driving means (15a, 15b) is separable from the first part (15a) thereof and belongs to manual control means including a structure (110, 150b1) bearing said second part (15b) of the driving means (15a, 15b) and an elongate rod (150b2) pivotably mounted on the structure (110, 150b1), so that it can be pushed, while the first (15a) and second (15b) parts of the driving means (15a, 15b) are in the inter-engaged position, so as to move one with respect to the other and thus drive said scraping means (12) around the tube (1).

6. The device according to one of claims 1 to 4, wherein the second part (15b) of the driving means (15a, 15b) is separable from said first part (15a) and belongs to powered control means including:
- a structure (110, 150b1) bearing said second part (15b) of the driving means (15a, 15b),
- a first series (47) of wheels to be arranged on the external surface of the tube (1), in order to roll on it substantially parallel to the axis of said tube (1), while the jaws (13a, 13b) are in the closed position,
- a remote-control power driving system (49) adapted to act on the second part (15b) of the driving means (15a, 15b), in order to drive the first part (15a) of said driving means, and therefore drive the scraping means (12), in rotation, while said first (15a) and second (15b) parts of the driving means are in the inter-engaged position.

7. The device according to one of the previous claims, wherein the first (15a) and second (15b) parts of the driving means (15a, 15b) define a toothed driving system in which said parts mesh with one another.

8. The device according to claim 6 or claims 6 and 7, wherein:
- the powered control means (15b, 49) include a second series (51) of wheels adapted to be arranged on at least one external rolling track (53a1, 53a2) of the body (11) in order to roll on it, about the axis of the tube (1), while the jaws (13a, 13b) are in the closed position, and
- the jaws (13a, 13b) have smooth external surfaces which are cylindrical when the jaws (13a, 13b) are in the closed position, and which then define said tracks (53a1, 53a2), for the rolling of said second series (51) of wheels.

9. The device according to one of the previous claims, wherein the first part (15a) of the driving means (13a, 13b) includes a crown (41) having two externally toothed parts (41a, 41b), pivotably connected one with respect to the other around said pivot pin.

10. The device according to claim 9, wherein, along the pivot pin, the jaws (13a, 13b) include, arranged side-by-side, said crown (41) and at least one unit (55a1, 55a2) which is in two parts pivoting about said pivot pin, which unit internally bears at least some of the scraping means (12).

11. The device according to claims 8 and 10, wherein the externally toothed crown (41) is arranged coaxially between two of said units (55a1, 55a2) in two pivotably connected parts at least one of which bears said scraping means (12), on the internal surface, and said rolling tracks (53a1, 53a2) are defined on the external surface of said unit(s) (55a1, 55a2).

12. The device according to one of the previous claims, wherein:
- rolling means (19) are mounted on the internal surface (130) of the jaws so as to cause them to roll around the external surface (1a1) of the tube, while the jaws are in the closed position,
- each axis (19a) of rotation of said rolling means (19) is oriented slightly at an angle with respect to the pivot pin (11a),
- and a part of the force created by the rotation of the structure (110) about the tube passes between said structure and the body (11) by means of a lateral contact (55a1/55a2, 57a1/57a2), thus ensuring that the scraping means (12) are driven in a spiral.
